# EUROPEAN PATENT APPLICATION

(11) **EP 4 632 041 A1**
(43) Date of publication of application: **15.10.2025**
(21) Application number: 23900418.7
(22) Date of filing: 16.11.2023
(51) Int. Cl.: C09K 21/12, C08K 5/52, C08L 101/00

(54) **FLAME-RETARDANT COMPOSITION, FLAME-RETARDANT RESIN COMPOSITION AND MOLDED ARTICLE**

(30) Priority: 09.12.2022 JP 2022196962
(71) Applicant: ADEKA CORPORATION, Arakawa-ku Tokyo 116-8554 (JP)
(72) Inventor: ASAI Kei, Tokyo 116-8554 (JP); SATO Fumihiko, Tokyo 116-8554 (JP); SAKURAI Hisashi, Tokyo 116-8554 (JP); BANNO Keisuke, Tokyo 116-8554 (JP); YONEZAWA Yutaka, Tokyo 116-8554 (JP); NAKAMURA Michio, Tokyo 116-8554 (JP)
(74) Representative: Müller-Boré & Partner Patentanwälte PartG mbB
(86) International application number: PCT/JP2023/041222
(87) International publication number: WO 2024/122297

(57) **Abstract**

The flame-retardant composition of the present invention includes one or more melamine salt components (A) selected from the group consisting of melamine orthophosphate, melamine pyrophosphate, and melamine polyphosphate; one or more piperazine salt components (B) selected from the group consisting of piperazine orthophosphate, piperazine pyrophosphate, and piperazine polyphosphate; and one or more dialkyl phosphinate compounds components (C) represented by General Formula (1), in which a content of the component (C) is **0.2** parts by mass or more and 39 parts by mass or less based on 100 parts by mass of a total content of the component (A), the component (B), and the component (C).

## Description

### TECHNICAL FIELD

The present invention relates to a flame-retardant composition, a flame-retardant resin composition containing the same, and a molded product thereof.

### BACKGROUND ART

So far, various developments have been made on a technique for flame retardant of a resin material. As this type of technology, a method of formulating a phosphorus-based flame retardant in a resin material is known, and an attempt has been made to use a combination of a phosphate compound and diethyl phosphinic acid salt.

For example, Patent Document 1 proposes the use of a diethyl phosphinic acid salt as a flame retardant blended in an adhesive and a sealing material, and further proposes the use of a phosphate compound as a synergistic agent. As specific combinations, there are descriptions of examples (Example 17 and Example 21) in which diethyl phosphinic acid salt and melamine polyphosphate are used in combination, and examples (Example 20) in which diethyl phosphinic acid salt and piperazine pyrophosphate are used in combination. However, Examples in which three components of diethyl phosphinate, melamine polyphosphate, and piperazine pyrophosphate were used in combination are not described.

Patent Document 2 proposes a thermoplastic resin composition containing an organic acid salt (D-1) of a cyclic amine compound and an inorganic acid salt-based flame retardant and a phosphinic acid metal salt-based flame retardant (D-2) as flame retardants for polylactic acid, and examples of a resin composition containing a piperazine phosphate-based flame retardant and a phosphinic acid aluminum salt or a resin composition containing a melamine pyrophosphate-based flame retardant and a phosphinic acid aluminum salt are described (Tables 1 and 2). However, examples in which three components of a piperazine phosphate-based flame retardant, a melamine pyrophosphate-based flame retardant, and an aluminum phosphinate salt are used in combination are not described.

It is known that a dialkyl phosphinic acid salt imparts flame retardancy to the resin but reduces the fluidity of the resin (Patent Document 3 and Patent Document 4). Specifically, Patent Document 3 describes that the dialkyl phosphinic acid salt itself has poor fluidity (paragraph 0006), and Patent Document 4 describes that the use of diethyl phosphinic acid salt causes various processing problems such as low fluidity, more difficult moldability, and longer injection molding time (paragraph 0006).

### RELATED DOCUMENT

### PATENT DOCUMENT

Patent Document 1: Japanese Unexamined Patent Publication No. 2008-291217
Patent Document 2: Japanese Unexamined Patent Publication No. 2014-098125
Patent Document 3: Japanese Unexamined Patent Publication No. 2014-198778
Patent Document 4: PCT Japanese Translation Patent Publication No. 2019-526673

### SUMMARY OF THE INVENTION

### TECHNICAL PROBLEM

However, as a result of studies conducted by the present inventors, it has been found that there is room for improvement in flame retardancy in the flame retardation techniques described in Patent Documents 1 and **2.**

In the related art, the flame retardancy of a resin material has been evaluated by using the UL-94V test.

However, even a resin material that achieves a V-0 rank, which is the highest rank in the UL-94V test, may cause flame dripping in other flame retardant tests.

For example, in applications such as interior materials for transportation machines such as automobiles, ships, aircraft, and railway vehicles, and interior materials for buildings, it is required that the melted resin material does not drip (fall) from the viewpoint of preventing the spread of fire.

Therefore, the present inventor has conducted studies on flame retardancy in the related art for the purpose of further improving flame retardancy conceived for preventing spread of flame.

### SOLUTION TO PROBLEM

In the flame retardation techniques described in Patent Documents 1 and **2,** examples of the combination of dialkyl phosphinic acid salt and melamine phosphate and the combination of dialkyl phosphinic acid salt and piperazine phosphate are described.

However, examples in which three components of dialkyl phosphinic acid salt, melamine phosphate, and piperazine phosphate are used in combination are not described in Patent Documents 1 and **2,** and the combination has not been sufficiently studied so far.

Furthermore, in the above-described study, the present inventor has found a phenomenon that the injection pressure during injection molding is reduced in a case where the dialkyl phosphinic acid salt is used in combination with two components of the melamine phosphate and the piperazine phosphate, as compared with a case where only the two components of the melamine phosphate and the piperazine phosphate are used. This phenomenon indicates that the fluidity of the resin during the molding processing is improved. In a case where the fluidity of the resin is improved, molding defects such as short molding and flow marks are less likely to occur, and thus the processability is improved. The above-described effect of reducing the injection pressure was completely unexpected. In Patent Documents 3 and **4,** there is a description that the dialkyl phosphinic acid salt reduces the fluidity of the resin.

Furthermore, the present inventor has found that, by using three components of dialkyl phosphinic acid salt, melamine phosphate, and piperazine phosphate in combination as essential components and setting the content proportion of dialkyl phosphinic acid salt in the three components within a predetermined range, the rank in the UL-94V test is improved as compared with the composition in which two components are used in combination, and the flame drip prevention effect is excellent.

Although the detailed mechanism is not clear, it is presumed that since the fluidity of the resin is improved by the combined use of the three components, a flame retardancy effect of each of the three components can be sufficiently obtained.

According to one aspect of the present invention, the following flame-retardant composition, flame-retardant resin composition, and molded product are provided.
1. A flame-retardant composition including one or more melamine salt components (A) selected from the group consisting of melamine orthophosphate, melamine pyrophosphate, and melamine polyphosphate; one or more piperazine salt components (B) selected from the group consisting of piperazine orthophosphate, piperazine pyrophosphate, and piperazine polyphosphate; and one or more dialkyl phosphinate compounds components (C) represented by General Formula (1), in which a content of the component (C) is 0.2 parts by mass or more and 39 parts by mass or less based on 100 parts by mass of a total content of the component (A), the component (B), and the component (C). 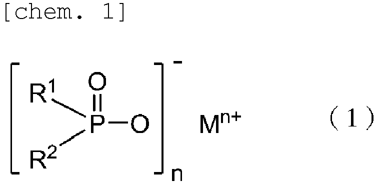 (in General Formula (1), R1 and R2 each independently represent an alkyl group having 1 to 6 carbon atoms, M represents Mg, Ca, Al, Sb, Sn, Ge, Ti, Fe, Zr, Zn, Ce, Bi, Sr, Mn, Li, Na, K, H, or a protonated nitrogen base, and n represents an integer of 1 to 4)
2. The flame-retardant composition according to 1., in which the content of the component (C) is 2 parts by mass or more and 25 parts by mass or less based on 100 parts by mass of a total content of the component (A), the component (B), and the component (C).
3. The flame-retardant composition according to 1. or 2., in which the content of the component (A) is 20 parts by mass or more and 60 parts by mass or less based on 100 parts by mass of a total content of the component (A) and the component (B).
4. The flame-retardant composition according to any one of 1. to 3., in which the content of the component (B) is 40 parts by mass or more and 80 parts by mass or less based on 100 parts by mass of a total content of the component (A) and the component (B).
5. The flame-retardant composition according to any one of 1. to 4., in which the flame-retardant composition contains at least one or more of the components (C) in which R¹ and R² in General Formula (1) are each independently any of an alkyl group having 2 to 4 carbon atoms.
6. The flame-retardant composition according to any one of 1. to 5., in which the flame-retardant composition contains at least one or more of the components (C) in which M in General Formula (1) is one selected from the group consisting of Al, Fe, Zn, and Na.
7. A flame-retardant resin composition comprising: a thermoplastic resin; and the flame-retardant composition according to any one of claims 1 to 6.
8. The flame-retardant resin composition according to 7., in which a content of the flame-retardant composition is 20 parts by mass or more and 70 parts by mass or less with respect to 100 parts by mass of the thermoplastic resin.
**9.** The flame-retardant resin composition according to **7. or** 8., in which the flame-retardant resin composition contains glass fibers.
10. A molded product formed of the flame-retardant resin composition according to any one of 7. to **9.**

### ADVANTAGEOUS EFFECTS OF INVENTION

According to the present invention, it is possible to provide a flame-retardant composition having excellent flame retardancy in a case of being blended with a resin, a flame-retardant resin composition containing the flame-retardant composition, and a molded product thereof.

### DESCRIPTION OF EMBODIMENTS

Hereinafter, embodiments of the present invention will be described.

The flame-retardant composition of the present embodiment includes one or more melamine salt components (A) selected from the group consisting of melamine orthophosphate, melamine pyrophosphate, and melamine polyphosphate; one or more piperazine salt components (B) selected from the group consisting of piperazine orthophosphate, piperazine pyrophosphate, and piperazine polyphosphate; and one or more dialkyl phosphinate compounds components (C) represented by General Formula (1).

In addition, in the flame-retardant composition, the content of the component (C) is configured to satisfy 0.2 parts by mass to 39 parts by mass with respect to 100 parts by mass of the total content of the component (A), the component (B), and the component (C).

In the present specification, the polyphosphoric acid is a polyphosphoric acid containing at least one kind of condensed phosphoric acid having a condensation degree of 3 or more, and may contain a mixture of two or more kinds of condensed phosphoric acids.

In addition, the polyphosphate refers to a salt compound formed of polyphosphoric acid and a base. The salt compound may include two or more kinds of salts having different kinds of bases.

In addition, the phosphates refer to orthophosphoric acid, pyrophosphoric acid, polyphosphoric acid, or a mixture of two or more thereof.

### <Flame-Retardant Composition>

The melamine salt component (A) will be hereinafter abbreviated as a melamine salt (A) or a component (A).

The melamine salt (A) is a salt of a phosphate and melamine. Specifically, the melamine salt (A) is selected from the group consisting of melamine orthophosphate, melamine pyrophosphate, and melamine polyphosphate, and one kind thereof may be used alone, or two or more kinds thereof may be used in combination.

Among these, as the melamine salt (A), from the viewpoint of flame retardancy, handleability, or storage stability, melamine pyrophosphate or melamine polyphosphate is preferable, and melamine pyrophosphate is more preferable. In a case where the melamine salt (A) is a mixture of a plurality of melamine salts, the mixture preferably contains melamine pyrophosphate, and the higher the content ratio of the melamine pyrophosphate, the more preferable.

The ratio of the phosphorus atom to melamine in the melamine salt (A) is not particularly limited, but from the viewpoint of flame retardancy, it is preferably **0.5** to 2 mol of melamine with respect to 1 mol of the phosphorus atom, and more preferably 0.8 to 1.2 mol of melamine with respect to 1 mol of the phosphorus atom.

The melamine salt (A) can be obtained, for example, by reacting phosphates corresponding to the component (A) or salts of the phosphates with melamine. In addition, among the melamine salts (A), melamine pyrophosphate and melamine polyphosphate can also be obtained by heating and condensing melamine orthophosphate.

Examples of the salts of the above-described phosphoric acids include sodium monohydrogen phosphate, potassium monohydrogen phosphate, sodium dihydrogen phosphate, potassium dihydrogen phosphate, sodium trihydrogen phosphate, potassium trihydrogen phosphate, sodium pyrophosphate, potassium pyrophosphate, sodium polyphosphate, and potassium polyphosphate.

In addition, the melamine pyrophosphate and the melamine polyphosphate may be obtained by heating and condensing melamine orthophosphate. As the melamine salt (A), melamine pyrophosphate or melamine polyphosphate obtained by heating and condensing melamine orthophosphate is preferable, and melamine pyrophosphate is particularly preferable.

The above-described piperazine salt component (B) is hereinafter abbreviated as a piperazine salt (B) or a component (B) .

The piperazine salt (B) is a salt of a piperazine and a phosphate. Specifically, the piperazine salt (B) is selected from the group consisting of piperazine orthophosphate, piperazine pyrophosphate, and piperazine polyphosphate, and one kind thereof may be used alone, or two or more kinds thereof may be used in combination.

Among these, as the piperazine salt (B), from the viewpoint of flame retardancy, handleability, and storage stability, piperazine pyrophosphate or piperazine polyphosphate is preferable, and piperazine pyrophosphate is particularly preferable. In a case where the component (B) is a mixture of a plurality of piperazine salts, it is preferable that the component (B) contains piperazine pyrophosphate, and the higher the content ratio of the piperazine pyrophosphate, the more preferable.

The ratio of the piperazine to the phosphorus atom in the piperazine salt (B) is not particularly limited, but from the viewpoint of flame retardancy, it is preferably 0.5 to 2 mol of piperazine with respect to 2 mol of the phosphorus atom, and more preferably 0.8 to 1.2 mol of piperazine with respect to 2 mol of the phosphorus atom.

The piperazine salt (B) can be obtained by reacting a phosphate or a salt of a phosphate corresponding to the component (B) with piperazine. As the salts of the above-described phosphates, the above-described salts can be used.

In addition, the piperazine pyrophosphate and the piperazine polyphosphate may be obtained by heating and condensing piperazine orthophosphate. As the piperazine salt (B), piperazine pyrophosphate or piperazine polyphosphate obtained by heating and condensing piperazine orthophosphate is preferable, and piperazine pyrophosphate is particularly preferable.

The dialkyl phosphinate compound component (C) is hereinafter abbreviated as a component (C).

The component (C) is a dialkyl phosphinate compound represented by General Formula (1).

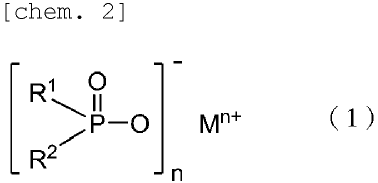

In General Formula (1), R¹ and R² each independently represent an alkyl group having 1 to 6 carbon atoms, M represents Mg, Ca, Al, Sb, Sn, Ge, Ti, Fe, Zr, Zn, Ce, Bi, Sr, Mn, Li, Na, K, H, or a protonated nitrogen base, and n represents an integer of 1 to 4.

Examples of the alkyl group having 1 to 6 carbon atoms, which can be adopted by R¹ and R² in General Formula (1), include linear or branched alkyl groups such as a methyl group, an ethyl group, a propyl group, an isopropyl group, a butyl group, an isobutyl group, a secondary butyl group, a tert-butyl group, a pentyl group, an isopentyl group, a neopentyl group, a tertiary pentyl group, a hexyl group, an isohexyl group, a tertiary hexyl group, and a heptyl group. Among these alkyl groups, from the viewpoint of flame retardancy, an alkyl group having 1 to 4 carbon atoms is preferable, an ethyl group, a butyl group, or a tert-butyl group is more preferable, and an ethyl group is still more preferable.

The component (C) may contain at least one or more compounds in which R¹ and R² in General Formula (1) each independently represent any alkyl group having 2 to 4 carbon atoms.

From the viewpoint of flame retardancy and processability, M in General Formula (1) is preferably one or more selected from the group consisting of Mg, Ca, Al, Fe, Zn, Na, and K, more preferably one or more selected from the group consisting of Al, Fe, Zn, and Na, still more preferably one or more selected from the group consisting of Al and Na, and particularly preferably Al.

As the component (C), one kind of compound may be used alone, or two or more kinds of compounds in which R ¹, R ², and M in General Formula (1) are different from each other may be used in combination. Specifically, the component (C) may contain at least one or more compounds in which M in General Formula (1) is one selected from the group consisting of Al, Fe, Zn, and Na.

Examples of a method for producing the component (C) include known methods. For example, PCT Japanese Translation Patent Publication No. 2001-525327 and Japanese Unexamined Patent Publication No. 2005-179362 disclose a method for producing dialkyl phosphinic acid salt.

In the flame-retardant composition of the present embodiment, from the viewpoint of flame retardancy and processability, the lower limit of the content of the component (C) is 0.2 parts by mass or more, preferably 1 part by mass or more, more preferably 2 parts by mass or more, and still more preferably 3 parts by mass or more with respect to the total mass of 100 parts by mass of the component (A), the component (B), and the component (C).

On the other hand, from the viewpoint of flame retardancy, the upper limit of the content of the component (C) is 39 parts by mass or less, preferably 30 parts by mass or less, more preferably 25 parts by mass or less, and still more preferably 20 parts by mass or less with respect to 100 parts by mass of the total mass of the component (A), the component (B), and the component (C).

In another aspect, from the viewpoint of higher flame retardancy and higher processability, the content of the component (C) may be 2 parts by mass or more and 25 parts by mass or less with respect to 100 parts by mass of the total mass of the component (A), the component (B), and the component (C).

In addition, in another aspect, in the flame-retardant composition of the present embodiment, from the viewpoint of further improving the flame retardancy, the content of the component (A) is, for example, 20 parts by mass or more and 60 parts by mass or less, preferably 30 parts by mass or more and 50 parts by mass or less, and more preferably 35 parts by mass or more and 45 parts by mass or less, with respect to 100 parts by mass of the total of the component (A) and the component (B).

In addition, in another aspect, in the flame-retardant composition of the present embodiment, from the viewpoint of further improving the flame retardancy, the content of the component (B) is, for example, 40 parts by mass or more and 80 parts by mass or less, preferably 50 parts by mass or more and 70 parts by mass or less, and more preferably 55 parts by mass or more and 65 parts by mass or less, based on 100 parts by mass of the total of the component (A) and the component (B).

In addition, the flame-retardant composition of the present embodiment may contain one or more kinds of flame retardant aids as the component (D). This makes it possible to improve the flame retardancy of the resin.

The flame retardant aid can contain a metal oxide or a polyhydric alcohol.

Examples of the metal oxide include titanium oxide, zinc oxide, calcium oxide, magnesium oxide, zirconium oxide, barium oxide, tin dioxide, lead dioxide, antimony oxide, molybdenum oxide, and cadmium oxide. These may be used alone, or two or more thereof may be used in combination. This makes it possible to improve the flame retardancy of the resin. In addition, it is possible to suppress the occurrence of aggregation in a powdery-granular flame-retardant composition. Zinc oxide is preferable from the viewpoint of flame retardancy.

The zinc oxide may or may not be surface-treated.

A commercially available product may be used as the zinc oxide. Examples thereof include Zinc Oxide Grade 1 (manufactured by Mitsui Mining & Smelting Co., Ltd.), partially coated zinc oxide (manufactured by Mitsui Mining & Smelting Co., Ltd.), NANOFINE 50 (ultrafine particulate zinc oxide having an average particle size of 0.02 µm, manufactured by Sakai Chemical Industry Co., Ltd.), and NANOFINE K (ultrafine particulate zinc oxide having an average particle size of 0.02 µm and coated with zinc silicate; manufactured by Sakai Chemical Industry Co., Ltd.) .

The polyhydric alcohol is a compound in which a plurality of hydroxy groups are bonded, examples of which include pentaerythritol, dipentaerythritol, tripentaerythritol, polypentaerythritol, neopentyl glycol, trimethylolpropane, ditrimethylolpropane, 1,3,5-tris(2-hydroxyethyl)isocyanurate, polyethylene glycol, glycerin, diglycerin, mannitol, maltitol, lactitol, sorbitol, erythritol, xylitol, xylose, sucrose, trehalose, inositol, fructose, maltose, and lactose. Among these polyhydric alcohols, one or more selected from pentaerythritol, dipentaerythritol, tripentaerythritol, and poly pentaerythritol are preferable, dipentaerythritol, tripentaerythritol, and poly pentaerythritol are more preferable, and dipentaerythritol is still more preferable. In addition, 1,3,5-tris(2-hydroxyethyl) isocyanurate and sorbitol can also be suitably used. These may be used alone, or two or more thereof may be used in combination.

In a case where the flame-retardant composition of the present embodiment contains the component (D), from the viewpoint of flame retardancy, the content of the component (D) is, for example, preferably 0.01 to 10 parts by mass, more preferably 0.5 to 8 parts by mass, and still more preferably 1 to 7 parts by mass with respect to 100 parts by mass of the total amount of the component (A) and the component (B).

In the present specification, the term **"to"** indicates that the upper limit value and the lower limit value are included, unless particularly stated otherwise.

The flame-retardant composition of the present embodiment may contain one or more kinds of drip inhibitors. As a result, it is possible to suppress dripping during the combustion of the resin.

Examples of the drip inhibitor include a layered silicate, a fluorine-based drip inhibitor, and a silicone rubber.

The layered silicate is a layered silicate mineral, and may be either natural or synthetic and is not particularly limited.

Examples of the layered silicate include smectite clay minerals such as montmorillonite, saponite, hectorite, beidellite, stevensite, and nontronite; as well as vermiculite, halloysite, swelling mica, and talc.

These may be used alone, or two or more thereof may be used in combination.

Among these layered silicates, saponite or talc is preferable from the viewpoint of prevention of dripping; and talc is particularly preferable from the viewpoint of economic efficiency such as price.

The above-described layered silicate may have a cation between the layers.

The cation may be a metal ion, or a part or all of the cation may be a cation other than the metal ion, such as an organic cation, a (quaternary) ammonium cation, or a phosphonium cation.

Examples of the metal ion include a sodium ion, a potassium ion, a calcium ion, a magnesium ion, a lithium ion, a nickel ion, a copper ion, and a zinc ion.

Examples of the organic cation or quaternary ammonium cation include a lauryltrimethylammonium cation, a stearyltrimethylammonium cation, a trioctylmethylammonium cation, a distearyldimethylammonium cation, a di-hardened beef tallow-dimethylammonium cation, and a distearyldibenzylammonium cation. These may be used alone, or two or more thereof may be used in combination.

Specific examples of the fluorine-based drip inhibitor include fluorine-based resins such as polytetrafluoroethylene, polyvinylidene fluoride, and polyhexafluoropropylene; and alkali metal or alkaline earth metal salts of perfluoroalkanesulfonic acids, such as sodium perfluoromethanesulfonate, potassium perfluoro-n-butanesulfonate, potassium perfluoro-t-butanesulfonate, sodium perfluorooctanesulfonate, and calcium perfluoro-2-ethylhexanesulfonate. Among these, polytetrafluoroethylene is preferable from the viewpoint of drip inhibiting properties. These may be used alone, or two or more thereof may be used in combination.

In a case where the flame-retardant composition of the present embodiment includes a drip inhibitor, the content of the drip inhibitor is preferably 0.01 to 5 parts by mass, more preferably 0.05 to 3 parts by mass, and still more preferably 0.1 to 1 part by mass with respect to 100 parts by mass of the total amount of the component (A) and the component (B). In a case where the content is less than 0.01 parts by mass, the drip inhibition effect may not be sufficient, and in a case where the content is more than 5 parts by mass, the characteristics of the resin may be deteriorated.

The flame-retardant composition of the present embodiment may contain a surface treatment agent.

Examples of the surface treatment agent include a silicone oil and a silane coupling agent.

By using the above-described silicone oil, it is possible to prevent aggregation of the powdery flame-retardant composition, improve storage stability, and improve dispersibility in the synthetic resin. In addition, water resistance can be improved.

The silicone oil can be used without particular limitation as long as it is a known silicone oil having a polysiloxane skeleton. The silicone oil may be a polymer having a linear polysiloxane skeleton, in which the side chains of polysiloxane may be all methyl groups, a part of the side chains of polysiloxane may have a phenyl group, or a part of the side chains of polysiloxane may have hydrogen.

Examples of the silicone oil include dimethyl silicone oil in which all terminals of a side chain of polysiloxane are methyl groups, methylphenyl silicone oil in which a terminal of a side chain of polysiloxane is a methyl group and a part of the side chain is a phenyl group, methylhydrogen silicone oil in which a terminal of a side chain of polysiloxane is a methyl group and a part of the side chain is hydrogen, and copolymers thereof. These silicone oils may be partially modified by epoxy modification, amino modification, carboxy modification, or the like. These may be used alone, or two or more thereof may be used in combination.

Among the silicone oils, from the viewpoint of preventing aggregation of the powdery flame-retardant composition, improving storage stability, and improving dispersibility in the synthetic resin, a dimethyl silicone oil and a methylhydrogen silicone oil are preferable, and a methylhydrogen silicone oil is more preferable.

Examples of the silane coupling agent include silane coupling agents having an alkenyl group such as vinyltrimethoxysilane, vinyltriethoxysilane, vinyltriacetoxysilane, vinyl tris(2-methoxyethoxy)silane, vinylmethyldimethoxysilane, octenyltrimethoxysilane, allyltrimethoxysilane, and p-styryltrimethoxysilane; silane coupling agents having an acrylic group such as 3-acryloxypropyltrimethoxysilane and 3-acryloxypropyltriethoxysilane; silane coupling agents having a methacrylic group such as 3-methacryloxypropylmethyldimethoxysilane, 3-methacryloxypropyltrimethoxysilane, 3-methacyloxypropylmethyldiethoxysilane, 3-methacryloxypropyltriethoxysilane, and methacryloxyoctyltrimethoxysilane; silane coupling agents having an epoxy group such as 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, and glycidoxyoctyltrimethoxysilane; silane coupling agents having an amino group such as N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl N-(1,3-dimethylbutylidene)propylamine, N-phenyl-3-aminopropyltrimethoxysilane, N,N'-bis[3-(trimethoxysilyl)propyl]ethylenediamine, and a hydrochloride of N-(vinylbenzyl)-2-aminoethyl-3-aminopropyltrimethoxysilane; silane coupling agents having an isocyanurate group such as tris-(trimethoxysilylpropyl)isocyanurate; silane coupling agents having a mercapto group such as 3-mercaptopropylmethyldimethoxysilane, 3-mercaptopropyltrimethoxysilane, and 3-mercaptopropyltriethoxysilane; silane coupling agents having an ureido group such as 3-ureidopropyltrimethoxysilane and 3-ureidopropyltriethoxysilane; silane coupling agents having a sulfide group such as bis(triethoxysilylpropyl)tetrasulfide; silane coupling agents having a thioester group such as 3-octanoylthio-1-propyltriethoxysilane; and silane coupling agents having an isocyanate group such as 3-isocyanatopropyltriethoxysilane and 3-isocyanatopropyltrimethoxysilane. These may be used alone, or two or more thereof may be used in combination.

From the viewpoint of flame retardancy, handleability, prevention of aggregation of flame retardant powder, and improvement of storage stability, among these silane coupling agents, a silane coupling agent having an epoxy group is preferable; and 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, or glycidoxyoctyltrimethoxysilane is more preferable.

In a case where the flame-retardant composition of the present embodiment contains a silicone oil, the content of the silicone oil is preferably 0.01 to 3 parts by mass and more preferably 0.1 to 1 part by mass with respect to 100 parts by mass of the total amount of the component (A) and the component (B), from the viewpoint of enhancing the above-described effect due to the incorporation of the silicone oil.

In a case where the flame-retardant composition of the present embodiment contains a silane coupling agent, from the viewpoint of enhancing the above-described effect of containing the silane coupling agent, the content of the silane coupling agent is preferably 0.01 to 3 parts by mass and more preferably 0.1 to 1 part by mass with respect to 100 parts by mass of the total amount of the component (A) and the component (B).

Examples of the method for adding the surface treatment agent include a method in which a powdery-granular flame-retardant composition is mixed with a surface treatment agent, and a method in which a surface treatment agent is spray-dried to be added to and mixed with a powdery-granular flame-retardant composition. In addition, the flame-retardant composition may be added by surface-treating all or a part of the flame-retardant composition with the above-described surface treatment agent.

The flame-retardant composition of the present embodiment may contain a processing aid.

The processing aid can be appropriately selected from known processing aids, but may include an acrylic acid-based processing aid.

Examples of the acrylic acid-based processing aid include a homopolymer or copolymer of an alkyl methacrylate such as methyl methacrylate, ethyl methacrylate, or butyl methacrylate; a copolymer of the alkyl methacrylate with an alkyl acrylate such as methyl acrylate, ethyl acrylate, or butyl acrylate; a copolymer of the alkyl methacrylate with an aromatic vinyl compound such as styrene, α-methylstyrene, or vinyltoluene; and a copolymer of the alkyl methacrylate with a vinyl cyan compound such as acrylonitrile or methacrylonitrile. These may be used alone, or two or more thereof may be used in combination.

The flame-retardant composition of the present embodiment may contain a dust suppressant.

Examples of the dust suppressant include an aliphatic dicarboxylic acid ether ester compound and the above-mentioned silane coupling agent.

The flame-retardant composition of the present embodiment may contain other components as long as the effects of the present invention are not impaired. As the other components, generally, additives used for modifying the thermoplastic resin can be used, and examples thereof include an antioxidant, a light stabilizer, an ultraviolet absorber, a crystal nucleating agent, a clarifying agent, a plasticizer, a lubricant, a flame retardant (however, excluding the component (A), the component (B), and the component (C)), a reinforcing material, a crosslinking agent, an antistatic agent, a metal soap, a filler, an antifogging agent, a plate-out prevention agent, a fluorescent agent, a fungicide, a bactericide, a foaming agent, a metal inactivator, a release agent, a pigment, and a dye. These may be used alone, or two or more thereof may be used in combination.

Examples of the antioxidant include a phenol-based antioxidant, a phosphite-based antioxidant, a thioether-based antioxidant, and other antioxidants.

Examples of the phenol-based antioxidant include 2,6-di-tert-butyl-p-cresol, 2,6-diphenyl-4-octadecyloxyphenol, distearyl(3,5-di-tert-butyl-4-hydroxybenzyl)phosphonate, 1,6-hexamethylene bis[(3,5-di-tert-butyl-4-hydroxyphenyl)propionic acid amide], 4,4'-thiobis(6-tert-butyl-m-cresol), 2,2'-methylene bis(4-methyl-6-tert-butylphenol), 2,2'-methylene bis(4-ethyl-6-tert-butylphenol), 4,4'-butylidene bis(6-tert-butyl-m-cresol), 2,2'-ethylidene bis(4,6-di-tert-butylphenol), 2,2'-ethylidene bis(4-secondary butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl) isocyanurate, 1,3,5-tris(3,5-di-tert-butyl-4-hydroxybenzyl) isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl) phenol, stearyl(3,5-di-tert-butyl-4-hydroxyphenyl)propionate, pentaerythritol tetrakis[3-(3,5-di-tert-butyl-4-hydroxyphenyl)propionate], thiodiethylene glycol bis[(3,5-di-tert-butyl-4-hydroxyphenyl)propionate], 1,6-hexamethylene bis[(3,5-di-tert-butyl-4-hydroxyphenyl)propionate], bis[3,3-bis(4-hydroxy-3-tert-butylphenyl)butyric acid] glycol ester, bis[2-tert-butyl-4-methyl-6-(2-hydroxy-3-tert-butyl-5-methylbenzyl)phenyl]terephthalate, 1,3,5-tris[(3,5-di-tert-butyl-4-hydroxyphenyl)propionyloxyethyl] isocyanurate, 3,9-bis[1,1-dimethyl-2-{ (3-tert-butyl-4-hydroxy-5-methylphenyl)propionyloxy}ethyl]-2,4,8,10-tetraoxaspiro[5,5]undecane, and triethylene glycol bis[(3-tert-butyl-4-hydroxy-5-methylphenyl)propionate]. These phenolic antioxidants can be used alone or in combination of two or more kinds thereof.

Examples of the phosphite-based antioxidant include trisnonylphenyl phosphite, tris[2-tert-butyl-4-(3-tert-butyl-4-hydroxy-5-methylphenylthio)-5-methylphenyl] phosphite, tridecyl phosphite, octyldiphenyl phosphite, didecylmonophenyl phosphite, bis(tridecyl)pentaerythritol diphosphite, bis(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetrakis(tridecyl)isopropylidene diphenol diphosphite, tetrakis(tridecyl)-4,4'-n-butylidenebis (2-tert-butyl-5-methylphenol) diphosphite, hexakis(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)amine, and a phosphite of 2-ethyl-2-butylpropylene and 2,4,6-tri-tertbutylphenol. These phosphite-based antioxidants can be used alone or in combination of two or more kinds thereof.

Examples of the thioether-based antioxidant include 3,3'-thiodipropionic acid, alkyl (C₁₂₋₁₄) thiopropionic acid, di(lauryl)-3,3'-thiodipropionate, dodecyl 3,3'-thiobispropionate, di(myristyl)-3,3'-thiopropionate, di(stearyl)-3,3'-thiopropionate, di(octadecyl)-3,3'-thiopropionate, lauryl stearyl thiopropionate, tetrakis[methylene-3-(dodecylthio)propionate]methane, thiobis(2-tert-butyl-5-methyl-4,1-phenylene)bis(3-(dodecylthio)propionate), 2,2'-thiodiethylene bis(3-aminobutenoate), 4,6-bis(octylthiomethyl)-o-cresol, 2,2'-thiodiethylene bis[3-(3,5-di-tert-butyl-4-hydroxyphenyl)propionate], 2,2'-thiobis(4-methyl-6-tertbutylphenol), 2,2'-thiobis(6-tert-butyl-p-cresol), 2-ethylhexyl-(3,5-di-tert-butyl-4-hydroxybenzyl)thioacetate, 4,4'-thiobis(6-tert-butyl-3-methylphenol), 4,4'-thiobis(4-methyl-6-tertbutylphenol), 4,4'-[thiobis(methylene)]bis(2-tert-butyl-6-methyl-1-hydroxybenzyl), bis(4,6-di-tert-butylphenol-2-yl)sulfide, tridecyl-3,5-di-tert-butyl-4-hydroxybenzylthioacetate, 1,4-bis(octylthiomethyl)-6-methylphenol, 2,4-bis(dodecylthiomethyl)-6-methylphenol, distearyl-disulfide, bis(methyl-4-[3-n-alkyl (C₁₂/C₁₄) thiopropionyloxy]5-tert-butylphenyl)sulfide, and the like. These thioether-based antioxidants can be used alone or in combination of two or more kinds thereof.

Examples of other antioxidants include nitrones such as N-benzyl-α-phenyl nitron, N-ethyl-α-methyl nitron, N-octyl-α-heptyl nitron, N-lauryl-α-undecyl nitron, N-tetradecyl-α-tridecyl nitron, N-hexadecyl-α-pentadecyl nitron, N-octyl-α-heptadecyl nitron, N-hexadecyl-α-heptadecyl nitron, N-octadecyl-α-pentadecyl nitron, N-heptadecyl-α-heptadecyl nitron, and N-octadecyl-α-heptadecyl nitron; benzofuran compounds such as 3-arylbenzofuran-2(3H)-one, 3-(alkoxyphenyl)benzofuran-2-one, 3-(acryloxyphenyl)benzofuran-2(3H)-one, 5,7-di-tert-butyl-3-(3,4-dimethylphenyl)-benzofuran-2(3H)-one, 5,7-di-tert-butyl-3-(4-hydroxyphenyl)-benzofuran-2(3H)-one, 5,7-di-tert-butyl-3-{4-(2-hydroxyethoxy)phenyl}-benzofuran-2(3H)-one, 6-(2-(4-(5,7-di-tert-3-oxo-2,3-dihydrobenzofuran-3-yl)phenoxy)ethoxy)-6-oxohexyl-6-((6-hydroxyhexanoyl)oxy)hexanoate, and 5-di-tert-butyl-3-(4-((15-hydroxy-3,6,9,13-tetraoxapentadecyl)oxy)phenyl)benzofuran-2(3H)-one. These other antioxidants can be used alone or in combination of two or more kinds thereof.

Examples of the light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)·bis(tridecyl)-1,2,3,4-butane tetracarboxylate, bis(1,2,2,6,6-pentamethyl-4-piperidyl)·bis(tridecyl)-1,2,3,4-butane tetracarboxylate, bis(1,2,2,6,6-pentamethyl-4-piperidyl)-2-butyl-2-(3,5-di-tert-butyl-4-hydroxybenzyl) malonate, 1-(2-hydroxyethyl)-2,2,6,6-tetramethyl-4-piperidin-ol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadecane, 1,5,8,12-tetrakis[2,4-bis(N-butyl-N-(1,2,2,6,6-pentamethyl-4-piperidyl)amino)-s-triazine-6-yl]-1,5,8-12-tetraazadecane, 1,6,11-tris[2,4-bis(N-butyl-N-(2,2,6,6-tetramethyl-4-piperidyl)amino)-s-triazine-6-yl]aminoundecane, 1,6,11-tris[2,4-bis(N-butyl-N-(1,2,2,6,6-pentamethyl-4-piperidyl)amino)-s-triazine-6-yl]aminoundecane, bis(2,2,6,6-tetramethyl-1-octyloxy-4-piperidyl)decane dioate, bis(2,2,6,6-tetramethyl-1-undecyloxy piperidine-4-yl) carbonate, 2,2,6,6-tetramethyl-4-piperidyl methacrylate, 1,2,3,4-butane tetracarboxylic acid, a polymer of 2,2-bis(hydroxymethyl)-1,3-propanediol, and 3-hydroxy-2,2-dimethylpropanal, 1,2,2,6,6-pentamethyl-4-piperidyl ester, 1,3-bis(2,2,6,6-tetramethylpiperidin-4-yl)2,4-ditridecylbenzene-1,2,3,4-tetracarboxylate, bis(1-octyloxy-2,2,6,6-tetramethyl-4-piperidyl) sebacate, and poly[[6-[(1,1,3,3-tetramethylbutyl)amino]-1,3,5-triazine-2,4-diyl][(2,2,6,6-tetramethyl-4-piperidyl)imino]-1,6-hexanediyl[(2,2,6,6-tetramethyl-4-piperidyl)imino]]), TINUVIN NOR 371 manufactured by BASF SE. These light stabilizers can be used alone or in combination of two or more kinds thereof.

Examples of the ultraviolet absorber include 2-hydroxybenzophenones such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylenebis(4-tert-octyl-6-(benzotriazolyl)phenol), and 2-(2'-hydroxy-3'-tert-butyl-5'-carboxyphenyl)benzotriazole; benzoates such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate, and hexadecyl-3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and triaryltriazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine. These ultraviolet absorbers can be used alone or in combination of two or more kinds thereof.

Examples of the crystal nucleating agent include carboxylic acid metal salts such as sodium benzoate, 4-tert-butylbenzoic acid aluminum salt, sodium adipate, and disodium bicyclo[2.2.1]heptane-2,3-dicarboxylate; phosphoric acid ester metal salts such as sodium bis(4-tert-butylphenyl)phosphate, sodium-2,2'-methylene bis(4,6-ditert-butylphenyl)phosphate, and lithium-2,2' bis(4-ditert-butylphenyl)phosphate; polyhydric alcohol derivatives such as dibenzylidenesorbitol, bis(methylbenzylidene)sorbitol, bis(3,4-dimethylbenzylidene)sorbitol, bis(p-ethylbenzylidene)sorbitol, bis(dimethylbenzylidene)sorbitol, 1,2,3-trideoxy-4,6:5,7-bis-O-((4-propylphenyl)methylene)-nonitol, 1,3:2,4-bis(p-methylbenzylidene)sorbitol, 1,3:2,4-bis-O-benzylidene-D-glucitol (dibenzylidenesorbitol), and amide compounds such as N,N',N"-tris[2-methylcyclohexyl]-1,2,3-propanetricarboxamide, N,N',N"-tricyclohexyl-1,3,5-benzenetricarboxamide, N,N'-dicyclohexyl-naphthalenedicarboxamide, and 1,3,5-tri(dimethylisopropylamino)benzene. These crystal nucleating agents can be used alone or in combination of two or more kinds thereof.

Examples of the plasticizer include epoxy-based plasticizers such as epoxidized soybean oil, epoxidized linseed oil, and epoxidized fatty acid octyl ester; methacrylate-based plasticizers; polyester-based plasticizers such as a polycondensate of a dicarboxylic acid and a polyhydric alcohol and a polycondensate of a polyvalent carboxylic acid and a polyhydric alcohol; polyether ester-based plasticizers such as a polycondensate of a dicarboxylic acid, a polyhydric alcohol, and an alkylene glycol, a polycondensate of a dicarboxylic acid, a polyhydric alcohol, and an arylene glycol, a polycondensate of a polyvalent carboxylic acid, a polyhydric alcohol, and an alkylene glycol, and a polycondensate of a polyvalent carboxylic acid, a polyhydric alcohol, and an arylene glycol; aliphatic ester-based plasticizers such as adipic acid ester and succinic acid ester; and aromatic ester-based plasticizers such as phthalic acid ester, terephthalic acid ester, trimellitic acid ester, pyromellitic acid ester, and benzoic acid ester. These plasticizers can be used alone or in combination of two or more kinds thereof.

Examples of the lubricant include pure hydrocarbon-based lubricants such as liquid paraffin, natural paraffin, micro wax, synthetic paraffin, low molecular weight polyethylene, and polyethylene wax; halogenated hydrocarbon-based lubricants; fatty acid-based lubricants such as higher fatty acid and oxy fatty acid; fatty acid amide-based lubricants such as fatty acid amide and bisfatty acid amide; ester-based lubricants such as lower alcohol ester of fatty acid, polyhydric alcohol ester of fatty acid, polyglycol ester of fatty acid, and fatty acid ester (ester wax); metal soap, fatty alcohol, polyhydric alcohol, polyglycol, polyglycerol, partial ester of fatty acid and polyhydric alcohol, partial ester of fatty acid, polyglycol and polyglycerol; silicone oil; and mineral oil. These lubricants can be used alone or in combination of two or more kinds thereof.

Examples of the flame retardant other than the component (A), the component (B), and the component (C) include aromatic phosphate esters such as triphenyl phosphate, tricresyl phosphate, trixylenyl phosphate, cresyldiphenyl phosphate, cresyl-2,6-dixylenyl phosphate, resorcinol bis(diphenyl phosphate), (1-methylethylidene)-4,1-phenylenetetraphenyl diphosphate, 1,3-phenylenetetrakis(2,6-dimethylphenyl) phosphate, and ADEKA STAB FP-500, ADEKA STAB FP-600, ADEKA STAB FP-800, and ADEKA STAB FP-900L, which are trade names of products manufactured by ADEKA CORPORATION; phosphonic acid esters such as phenylphosphonic acid divinyl, phenylphosphonic acid diallyl, and phenylphosphonic acid (1-butenyl); phosphinic acid esters such as diphenylphosphinic acid phenyl, diphenylphosphinic acid methyl, and 9,10-dihydro-9-oxa-10-phosphaphenanthrene-10-oxide derivatives; dialkyl phosphinic acid salts such as diethylphosphinic acid aluminum and diethylphosphinic acid zinc; phosphazene compounds such as bis(2-allylphenoxy)phosphazene and dicresylphosphazene; inorganic phosphorus-based flame retardants such as red phosphorus; metal hydroxides such as magnesium hydroxide and aluminum hydroxide; brominated flame retardants such as brominated bisphenol A-type epoxy resin, brominated phenol novolac-type epoxy resin, hexabromobenzene, pentabromotoluene, ethylene bis(pentabromophenyl), ethylene bis tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, and 2,4,6-tris(tribromophenoxy)-1,3,5-triazine, tribromophenylmaleimide, tribromophenyl acrylate, tribromophenyl methacrylate, tetrabromobisphenol A dimethacrylate, pentabromobenzyl acrylate, and brominated styrene. These flame retardants can be used alone or in combination of two or more kinds thereof.

Examples of the antistatic agent include cationic antistatic agents such as fatty acid quaternary ammonium ion salts and polyamine quaternary salts, anionic antistatic agents such as higher alcohol phosphate ester salts, higher alcohol EO adducts, polyethylene glycol fatty acid esters, anionic type alkyl sulfonic acid salts, higher alcohol sulfuric acid ester salts, higher alcohol ethylene oxide adduct sulfuric acid ester salts, and higher alcohol ethylene oxide adduct phosphoric acid ester salts, nonionic antistatic agents such as polyhydric alcohol fatty acid esters, polyglycol phosphoric acid esters, and polyoxyethylene alkyl allyl ethers, amphoteric alkyl betaines such as alkyldimethylaminoacetic acid betaines, and amphoteric antistatic agents such as imidazoline type amphoteric activators. These antistatic agents can be used alone or in combination of two or more kinds thereof.

Examples of the filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, silica, alumina, potassium titanate whiskers, wollastonite, fibrous magnesium oxysulfate, and montmorillonite where the particle diameter (the fiber diameter, the fiber length, or the aspect ratio in the fibrous shape) can be appropriately selected and used. These fillers can be used alone or in combination of two or more kinds thereof. In addition, as the filler, the one that has been subjected to a surface treatment can be used as necessary.

Examples of the pigment include Pigment Red 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, 254; Pigment Orange 13, 31, 34, 36, 38, 43, 46, 48, 49, 51, 52, 55, 59, 60, 61, 62, 64, 65, 71; Pigment Yellow 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, 185; Pigment Green 7, 10, 36; Pigment Blue 15, 15:1, 15:2, 15:3, 15:4, 15:5, 15:6, 22, 24, 56, 60, 61, 62, 64; and Pigment Violet 1, 19, 23, 27, 29, 30, 32, 37, 40, 50. These pigments can be used alone or in combination of two or more kinds thereof.

Examples of the dye include an azo dye, an anthraquinone dye, an indigoid dye, a triarylmethane dye, a xanthene dye, an alizarin dye, an acridine dye, a stilbene dye, a thiazole dye, a naphthol dye, a quinoline dye, a nitro dye, an indamine dye, an oxazine dye, a phthalocyanine dye, and a cyanine dye. These dyes can be used alone or in combination of two or more kinds thereof.

One or more selected from the above-described flame retardant aid, drip inhibitor, surface treatment agent, processing aid, dust suppressant, and additives consisting of other components may be blended into the flame-retardant composition or may be blended into the flame-retardant resin composition described later.

The flame-retardant composition according to the embodiment of the present invention is effective for flame retardation of a synthetic resin, and is preferably used as a flame-retardant resin composition by being blended with a synthetic resin.

### <Flame-Retardant Resin Composition>

Next, the flame-retardant resin composition of the present embodiment will be described.

The flame-retardant resin composition includes the above-mentioned flame-retardant composition and a thermoplastic resin.

The content of the flame-retardant composition is, for example, 10 to 400 parts by mass, preferably 15 to 200 parts by mass, and more preferably 20 to 70 parts by mass with respect to 100 parts by mass of the thermoplastic resin. In this manner, flame retardancy of the thermoplastic resin can be sufficiently improved.

Examples of the thermoplastic resin include synthetic resins such as a polyolefin-based resin, a styrene-based resin, a polyester-based resin, a polyether-based resin, a polycarbonate-based resin, a polyamide-based resin, and a halogen-containing resin. These may be used alone, or two or more thereof may be used in combination.

As further examples of the above-mentioned thermoplastic resin, thermoplastic resins such as petroleum resins, coumarone resins, polyvinyl acetate, acrylic resins, polymethyl methacrylates, polyvinyl alcohols, polyvinyl formals, polyvinyl butyrals, polyphenylene sulfides, polyurethanes, cellulosic resins, polyimide resins, polysulfones, and liquid crystal polymers, and blended products thereof can be used.

In addition, the thermoplastic resin may be a thermoplastic elastomer such as isoprene rubber, butadiene rubber, ethylene-propylene rubber, ethylene-propylene-diene rubber, acrylonitrile-butadiene copolymer rubber, styrene-butadiene copolymer rubber, an olefin-based elastomer, a styrene-based elastomer, a polyester-based elastomer, a nitrile-based elastomer, a nylon-based elastomer, a vinyl chloride-based elastomer, a polyamide-based elastomer, or a polyurethane-based elastomer, or may be used in combination.

Specific examples of the thermoplastic resin include, but are not particularly limited to, polyolefin-based resins, for example, α-olefin polymers such as polypropylene, high-density polyethylene, low-density polyethylene, linear low-density polyethylene, polybutene-1, poly(3-methylpentene), poly(4-methylpentene), and ethylene/propylene block or random copolymer; thermoplastic linear polyester-based resins such as polyethylene terephthalate, polybutylene terephthalate, and polyhexamethylene terephthalate; polysulfide-based resins such as polyphenylene sulfide; polylactic acid-based resins such as polycaprolactone; linear polyamide-based resins such as polyhexamethylene adipamide; and crystalline polystyrene-based resins such as syndiotactic polystyrene.

These thermoplastic resins can be used regardless of the molecular weight, the degree of polymerization, the density, the softening point, the proportion of insoluble components in a solvent, the degree of steric regularity, the presence or absence of a catalyst residue, the kind and blending ratio of monomers as raw materials, the kind of a polymerization catalyst (for example, a Ziegler-Natta catalyst, a metallocene catalyst, and the like), and the like. Among these thermoplastic resins, from the viewpoint of imparting excellent flame retardancy, one or more selected from the group consisting of a polyolefin-based resin, a polystyrene-based resin, and a copolymer thereof are preferable, a polyolefin-based resin is more preferable, and polypropylene, high-density polyethylene, low-density polyethylene, and linear low-density polyethylene are still more preferable, and it is also preferable to use these in combination with a thermoplastic elastomer.

The flame-retardant resin composition according to the present embodiment may contain glass fibers. In this manner, the resin physical properties and flame retardancy can be improved.

The kind of the glass fiber is not particularly limited, and any of E glass, C glass, S glass, D glass, and the like can be used. In addition, the form of the glass fiber is not particularly limited, and any of chopped strand, roving, yarn, glass wool, and the like can be used. As the glass fiber, a commercially available glass fiber can be used.

From the viewpoint of processability and flame retardancy, the glass fiber is preferably a chopped strand in which single fibers are converged. In a case where the chopped strand is used, the cut length is preferably 0.5 mm to 10 mm and more preferably 2 mm to 5 mm from the viewpoint of processability and flame retardancy. In addition, from the viewpoint of processability and flame retardancy, the diameter of the single fiber is preferably 8 µm to 20 µm and more preferably 10 µm to 15 µm.

The glass fiber may be treated with a surface treatment agent in order to improve wettability, adhesiveness, and the like with the thermoplastic resin. Examples of the surface treatment agent include a silane-based coupling agent, a titanate-based coupling agent, an aluminum-based coupling agent, a chromium-based coupling agent, a zirconium-based coupling agent, and a borane-based coupling agent. Among these, a silane-based coupling agent and a titanate-based coupling agent are preferable, and a silane-based coupling agent is particularly suitable. Examples of the silane-based coupling agent include triethoxysilane, vinyltris(β-methoxyethoxy)silane, γ-methacryloxypropyltrimethoxysilane, γ-glycidoxypropyltrimethoxysilane, β-(3,4-epoxycyclohexyl)ethyltrimethoxysilane, N-β-(aminoethyl)-γ-aminopropyltrimethoxysilane, N-β-(aminoethyl)-γ-aminopropylmethyldimethoxysilane, γ-aminopropyltriethoxysilane, N-phenyl-γ-aminopropyltrimethoxysilane, γ-mercaptopropyltrimethoxysilane, and γ-chloropropyltrimethoxysilane.

A coalescing agent may be used for the glass fiber to converge the glass fiber. Examples of the coalescing agent include a polypropylene resin, a polyurethane resin, a polyester resin, an acrylic resin, an epoxy resin, starch, and vegetable oil.

In the flame-retardant resin composition of the present embodiment, from the viewpoint of processability and flame retardancy, the content of the glass fiber is preferably 1 to 100 parts by mass, more preferably 5 to 80 parts by mass, and still more preferably 10 to 70 parts by mass with respect to 100 parts by mass of the thermoplastic resin.

The flame-retardant resin composition of the present embodiment may contain, as necessary, one or more selected from the above-described flame retardant aid, drip inhibitor, surface treatment agent, dust suppressant, and additives consisting of other components in addition to the above-described flame-retardant composition. These may be used alone, or two or more thereof may be used in combination.

The content of the additive (filler, and flame retardant other than the components (A) to (C) of the present invention) in the flame-retardant resin composition is, for example, 0.001 to 15 parts by mass, preferably 0.005 to 10 parts by mass, and more preferably 0.01 to 5 parts by mass with respect to 100 parts by mass of the thermoplastic resin. By setting such a numerical value range, the effect of the additive can be improved.

The content of the filler in a case of being blended with the flame-retardant resin composition is, for example, 1 to 100 parts by mass, preferably 3 to 80 parts by mass, and more preferably 5 to 50 parts by mass with respect to 100 parts by mass of the thermoplastic resin.

The content of the flame retardant other than the components (A) to (C) of the present invention in a case where the flame retardant other than the components (A) to (C) of the present invention is blended in the flame-retardant resin composition is, for example, 1 to 200 parts by mass, preferably 3 to 150 parts by mass, and more preferably 5 to 80 parts by mass with respect to 100 parts by mass of the thermoplastic resin.

In a case where a polyolefin-based resin or an olefin-based elastomer is used as the thermoplastic resin, the flame-retardant resin composition preferably contains a known neutralizing agent in order to neutralize a catalyst residue in the resin, within a range where the effect of the present invention is not impaired. Examples of the neutralizing agent include fatty acid metal salts such as calcium stearate, lithium stearate, sodium stearate, and magnesium stearate, fatty acid amide compounds such as ethylene bis(stearic acid amide), ethylene bis(12-hydroxystearic acid amide), and stearic acid amide, and inorganic compounds such as hydrotalcite. These neutralizing agents can be used alone or in combination of two or more kinds thereof. The amount of these neutralizing agents used is preferably 0.001 to 3 parts by mass and more preferably 0.01 to 1 part by mass with respect to 100 parts by mass of the thermoplastic resin.

Next, a method for producing the flame-retardant resin composition will be described.

The flame-retardant resin composition can be obtained by mixing the above-mentioned flame-retardant composition and thermoplastic resin. If necessary, the above-mentioned additives may be mixed therewith. The additives may be mixed in the flame-retardant composition or may be mixed in the mixture of the flame-retardant composition and the thermoplastic resin.

As a method of mixing, a commonly used known method can be applied as it is. Examples thereof include a method of mixing a flame-retardant composition, a thermoplastic resin, and an additive as necessary with a mixer such as a typical blender or a mixer, a method of melt-kneading with an extruder or the like, and a method of mixing with a solvent and casting a solution.

The flame-retardant resin composition can be used in various forms, and examples thereof include a pellet shape, a granule shape, and a powder shape. From the viewpoint of handleability, the pellet shape is preferable.

### <Molded Product>

A molded product can be produced by molding using the flame-retardant resin composition.

Examples of the molding method include, but are not particularly limited to, injection molding, extrusion molding, blow molding, rotary molding, vacuum molding, inflation molding, calendar molding, slash molding, dip molding, foam molding, and additive manufacturing. Among these, an injection molding method, an extrusion molding method, and a blow molding method are preferable.

As a result, it is possible to produce molded products having various types of shapes such as a resin plate, a sheet, a film, and an irregular shape article.

The molded product formed of the flame-retardant resin composition can be used for various applications, and for example, it can be used for various applications such as interior materials for transportation machines such as automobiles, ships, aircrafts, and railway vehicles, building materials such as interior materials for buildings, electrical and electronic parts, mechanical components, optical devices, automobile components, and daily necessities. Among these, the flame-retardant composition can be suitably used for an interior material for a transport machine, an interior material for a building, and electrical and electronic parts, since the flame-retardant composition has excellent flame retardancy.

The flame-retardant resin composition and a molded product formed therefrom can be used in a wide variety of industrial fields such as the fields of electricity, electronics, and communication, agriculture, forestry and fisheries, mining, construction, food, textiles, clothing, medical care, coal, petroleum, rubber, leather, automobiles, precision equipment, wood, construction material, civil engineering, furniture, printing, and musical instruments. Specifically, a flame-retardant resin composition of the present invention and a molded product formed therefrom can be used for a printer, a personal computer, a word processor, a keyboard, a PDA (small information terminal), a telephone, a copy machine, a facsimile, an electronic cash register (ECR), a desk calculator, an electronic notepad, an electronic card, a holder, stationery, other stationary supplies, OA equipment, a washing machine, a refrigerator, a vacuum cleaner, a microwave oven, a lighting apparatus, a gaming console, a clothes iron, kotatsu (a Japanese table with an electric heater), other household appliances, a TV set, a VTR, a video camera, a radio-cassette recorder, a tape recorder, a minidisk, a CD player, a speaker, a liquid crystal display, audio-visual equipment, a connector, a relay, a condenser, a switch, a printed circuit board, a coil bobbin, a semiconductor sealing material, an LED sealing material, an electric wire, a cable, a transformer, a deflecting yoke, a power distribution board, a clock, electric and electronic parts, and communication equipment.

The flame-retardant resin composition and a molded product formed therefrom can be used in various types of applications including: materials for use in automobiles, vehicles, ships, aircraft, buildings, and houses such as seats (fillings, outer materials, and the like), belts, ceiling coverings, convertible tops, armrests, door trims, rear package trays, carpets, mats, sun visors, wheel covers, mattress covers, air bags, insulating materials, hand holding rings, hand holding straps, electric wire covering materials, electric insulating materials, paints, coating materials, upholstery materials, floor materials, corner walls, carpets, wallpaper, wall covering materials, exterior materials, interior materials, roofing materials, decking materials, wall materials, pillar materials, deckings, fence materials, frameworks, moldings, windows, door profiles, shingles, panels, terraces, balconies, noise insulation boards, heat insulation boards, and window materials; building materials and civil engineering materials; and housewares and sporting goods such as clothes, curtains, bed sheets, plywood boards, synthetic fiber boards, rugs, doormats, sheets, buckets, hoses, containers, glasses, bags, cases, goggles, ski plates, rackets, tents, and musical instruments.

As described above, the embodiments according to the present invention have been described; however, these are examples according to the present invention, and thus it is possible to adopt various configurations other than the above. In addition, the present invention is not limited to the embodiments described above and modifications, improvements, and the like are included in the present invention in a range in which it is possible to achieve the object of the present invention.

### Examples

A detailed description will be given below of the present invention with reference to Examples, but the present invention is not limited to the descriptions of these Examples. In addition, all the formulation amounts shown in Table 1 are based on parts by mass.

### (Examples 1 to 18 and Comparative Examples 1 to 9)

### <Production Example 1: Component (A): Production of Melamine Salt>

Melamine salt containing melamine pyrophosphate as a main component was produced by performing a thermal condensation reaction of melamine orthophosphate at 220°C for 6 hours in a solid phase state. The melamine salt was used as it was without purification. The purity of melamine pyrophosphate (MPP) in the melamine salt was 98.5%.

### <Production Example 2: Component (B): Production of Piperazine Salt>

Piperazine salt containing piperazine pyrophosphate as a main component was produced by performing a thermal condensation reaction of piperazine diphosphate at 250°C for 1 hour in a solid phase state. The piperazine salt was used as it was without purification. The purity of piperazine pyrophosphate (PPP) in the piperazine salt was 99.0%.

The purities of the melamine salt and the piperazine salt were measured using an ion chromatograph measuring device ICS-2100 (Thermo Fisher Scientific Inc.), a Dionex IonPac AS-19 column (Thermo Fisher Scientific Inc.), and an electric conductivity detector.

### <Production Example 3: Production of Polypropylene Composition>

0.1 parts by mass of pentaerythritol tetrakis[3-(3,5-di-tert-butyl-4-hydroxyphenyl)propionate] as a phenol-based antioxidant, 0.1 parts by mass of tris(2,4-di-tert-butylphenyl)phosphite as a phosphorus-based antioxidant, and 0.1 parts by mass of calcium stearate as a neutralizing agent were mixed with 100 parts by mass of impact copolymer polypropylene (melt flow rate [230°C, load 2.16 kg]: 14 g/10 min) to obtain a polypropylene composition.

Details of each component in Table 1 are shown below.

Polypropylene composition: the polypropylene composition produced in Production Example 3 was used.
Glass fiber: chopped strand, product name CSF3PE-957S, manufactured by Nitto Boseki Co., Ltd., cut length of 3.0 mm, single fiber diameter of 13 µm
Melamine salt (A): the melamine salt produced in Production Example 1 was used.
Piperazine salt (B): the piperazine salt produced in Production Example 2 was used.
(C) Phosphinic acid metal salt 1: diethyl phosphinic acid aluminum salt (DEPAl)
(C) Phosphinic acid metal salt 2: diethyl phosphinic acid sodium salt (DEPNa)
(C) Phosphinic acid metal salt 3: diethyl phosphinic acid zinc salt (DEPZn)
(C) Phosphinic acid metal salt 4: diethyl phosphinic acid iron (III) salt (DEPFe)

### <Manufacturing of Flame-Retardant Resin Composition>

The respective components were mixed together in the formulation amounts shown in Table 1, and melt-kneaded under the conditions of a cylinder temperature of 180°C to 230°C and a screw speed of 150 rpm using a twin-screw extruder (TEX25αIII, manufactured by Japan Steel Works, Ltd.) to obtain a resin strand. The obtained resin strand was cut with a pelletizer to obtain a pellet-shaped flame-retardant resin composition.

The obtained flame-retardant resin composition was evaluated for the following items.

### <Production of Test Piece for Evaluation Test>

The pellet-shaped flame-retardant resin composition obtained above was subjected to injection molding with an injection molding machine (NEX-80, manufactured by Nissei Plastic Industrial Co., Ltd.) under conditions of a cylinder temperature of 210°C and a mold temperature of 40°C to obtain a test piece of 100 mm × 100 mm × 3 mm and a test piece of 127 mm × 12.7 mm × 1.6 mm. Using these test pieces, the following flame retardancy evaluation was performed.

### <Evaluation of Processability: Measurement of Injection Pressure>

The pellet-shaped flame-retardant resin composition obtained above was subjected to injection molding using an injection molding machine (NEX-80, manufactured by Nissei Plastic Industrial Co., Ltd.) under the conditions of a cylinder temperature of 210°C, an injection speed of 20 mm/sec, a back pressure of 5 MPa, a holding pressure of 30 MPa, and a mold temperature of 40°C, and molded into a test piece (single-sided side gate) of 100 mm × 100 mm × 3 mm. The maximum value of the injection pressure at the time of V-P switching was recorded. Here, the term "at the time of V-P switching" refers to a switching timing from the injection step by the injection speed control to the pressure holding step by the injection pressure control.

### <Evaluation of Flame Retardancy: Vertical Cone Calorimeter Combustion Test>

A cone calorimeter (CONE III manufactured by Toyo Seiki Seisaku-sho, Ltd.) was used for the test. The conical heater was installed vertically with respect to the floor surface, and the 100 mm × 100 mm × 3 mm test piece produced as described above was fixed vertically with respect to the floor surface to face the heater at a position 25 mm in front of the heater. After heating for 3 minutes under the condition of a radiation heat flux of 15 kW/m², sparks were generated until the test piece was ignited from the surface of the test piece at a distance of 5 mm by a spark plug. A peak heat release rate (PHRR; unit: kW/m²) and a self-extinguishing time (unit: seconds) after the ignition of the test piece were measured, and the presence or absence of flame dripping (dripping of flame-combusted resin) during combustion was observed. In a case where the self-extinguishing time was longer than 600 seconds or the test piece was burned out, it was described as "BO". The smaller the peak heat release rate and the shorter the self-extinguishing time, the higher the flame retardancy. In addition, the fact that the flame did not drip means that the possibility of spreading fire in the case of a fire is low, and thus the flame retardancy is evaluated to be high. The evaluation results are shown in Table 1.

### <Flame Retardancy Evaluation: UL-94V>

The test piece produced as described above was held vertically, the flame of the burner was ignited for 10 seconds, the flame was removed, and the combustion time t1 until the flame ignited on the test piece was extinguished was measured. Next, as the flame was extinguished, the second ignition was started for 10 seconds, and the combustion time t2 until the flame was extinguished was measured in the same manner as in the first ignition. In addition, it was also evaluated at the same time whether or not the cotton placed under the test piece was ignited by the falling fire. t1, t2, the presence or absence of cotton ignition, and the like were evaluated according to the UL-94 standard to determine the combustion rank. The combustion rank is highest at V-0, and the flame retardancy decreases as the combustion rank becomes V-1 and V-2. In this regard, the case that does not correspond to any of the ranks of V-0 to V-2 is defined as NR. The results of the combustion rank are shown in Table 1.

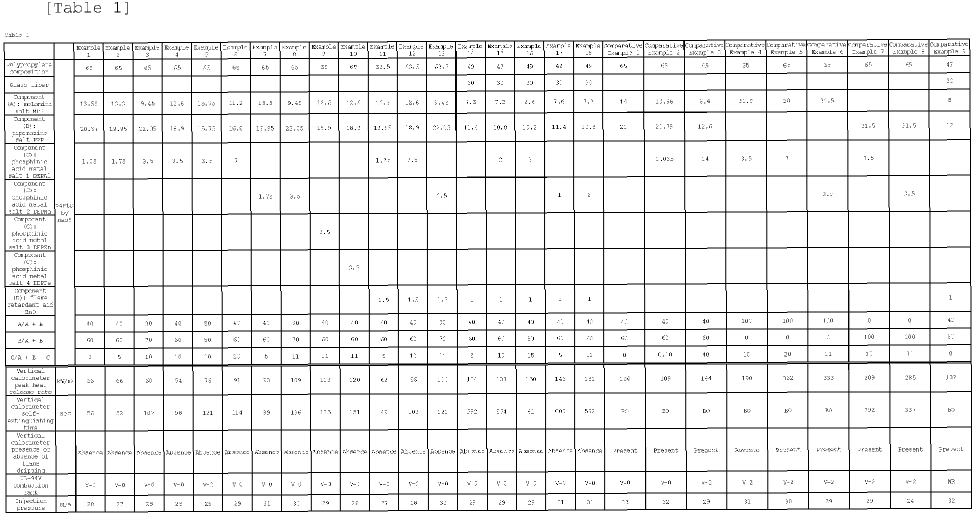

From Table 1, it was found that the flame retardancy of the flame-retardant resin compositions of Examples 1 to 18 was excellent, regardless of the presence or absence of the glass fiber, since the flame drip was not generated during the combustion test of a vertical cone calorimeter and the combustion rank of UL-94V was high (V-0) as compared with Comparative Examples 1 to 3 and 5 to 9 and as compared with Comparative Examples 2 to 9.

In Comparative Examples 1 and 2, in a case where the component (C) was not contained or a trace amount of the component (C) was contained, the UL-94V was represented by a V-0 rank, but flame dripping was generated in the vertical cone calorimeter combustion test. In addition, the self-extinguishing did not occur within 600 seconds in the vertical cone calorimeter combustion test, and the value of the injection pressure was higher than that of Examples 1 to 18.

On the other hand, in Comparative Example 3, in a case where the content of the component (C) was excessive, the value of the injection pressure was lower than that in Comparative Example 1, but the UL-94V was in the V-2 rank, and flame dripping occurred in the vertical cone calorimeter combustion test.

In addition, in Comparative Examples 4 to 6, in a case of an example in which the component (B) was not included but the component (A) and the component (C) were included, the UL-94V was in the V-2 rank, and the self-extinguishing did not occur within 600 seconds in the vertical cone calorimeter combustion test.

In addition, in Comparative Examples 7 and 8, in a case of an example in which the component (A) was not included but the component (B) and the component (C) were included, the UL-94V was in the V-2 rank, and the flame dripping was generated in the vertical cone calorimeter combustion test.

In Comparative Example 9, in a case where the component (A), the component (B), and the glass fiber were contained but the component (C) was not contained, UL-94V was represented by NR, flame dripping occurred in the vertical cone calorimeter combustion test, self-extinguishing did not occur within 600 seconds, and the value of the injection pressure was higher than that of Examples 1 to 18.

In addition, in the flame-retardant composition obtained by producing a flame-retardant composition containing the component (A), the component (B), and the component (C) (and the component (D) as necessary) in the same manner as the blending ratios in Table 1 of Examples 1 to 18 and then formulating the flame-retardant composition with the polypropylene composition, the same evaluation results as in Examples 1 to 18 were obtained even in the flame-retardant resin composition.

From this, it was found that the flame-retardant compositions of Examples 1 to 18 can improve the flame retardancy of the flame-retardant resin composition by being blended with the thermoplastic resin (polypropylene composition). In addition, it was found that the flame-retardant composition of each example can improve the processability of the thermoplastic resin since the injection pressure during injection molding is reduced.

This application claims priority based on Japanese Patent Application No. 2022-196962 filed December 9, 2022, the entire disclosure of which is incorporated herein by reference.

## Claims

1. A flame-retardant composition comprising:
one or more melamine salt components (A) selected from the group consisting of melamine orthophosphate, melamine pyrophosphate, and melamine polyphosphate;
one or more piperazine salt components (B) selected from the group consisting of piperazine orthophosphate, piperazine pyrophosphate, and piperazine polyphosphate; and
one or more dialkyl phosphinate compounds components (C) represented by General Formula (1),
where a content of the component (C) is 0.2 parts by mass or more and 39 parts by mass or less based on 100 parts by mass of a total content of the component (A), the component (B), and the component (C). 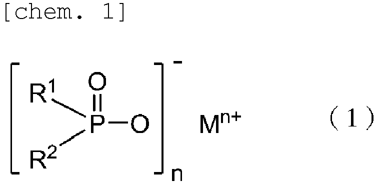
(in General Formula (1), R¹ and R² each independently represent an alkyl group having 1 to 6 carbon atoms, M represents Mg, Ca, Al, Sb, Sn, Ge, Ti, Fe, Zr, Zn, Ce, Bi, Sr, Mn, Li, Na, K, H, or a protonated nitrogen base, and n represents an integer of 1 to 4)

2. The flame-retardant composition according to claim 1,
wherein the content of the component (C) is 2 parts by mass or more and 25 parts by mass or less based on 100 parts by mass of a total content of the component (A), the component (B), and the component (C).

3. The flame-retardant composition according to claim 1 or 2,
wherein the content of the component (A) is 20 parts by mass or more and 60 parts by mass or less based on 100 parts by mass of a total content of the component (A) and the component (B).

4. The flame-retardant composition according to any one of claims 1 to 3,
wherein the content of the component (B) is 40 parts by mass or more and 80 parts by mass or less based on 100 parts by mass of a total content of the component (A) and the component (B) .

5. The flame-retardant composition according to any one of claims 1 to 4,
wherein the flame-retardant composition contains at least one or more of the components (C) in which R¹ and R² in General Formula (1) are each independently any of an alkyl group having 2 to 4 carbon atoms.

6. The flame-retardant composition according to any one of claims 1 to 5,
wherein the flame-retardant composition contains at least one or more of the components (C) in which M in General Formula (1) is one selected from the group consisting of Al, Fe, Zn, and Na.

7. A flame-retardant resin composition comprising:
a thermoplastic resin; and
the flame-retardant composition according to any one of claims 1 to 6.

8. The flame-retardant resin composition according to claim 7,
wherein a content of the flame-retardant composition is 10 parts by mass or more and 400 parts by mass or less with respect to 100 parts by mass of the thermoplastic resin.

9. The flame-retardant resin composition according to claim 7 or 8,
wherein the flame-retardant resin composition contains glass fibers.

10. A molded product formed of the flame-retardant resin composition according to any one of claims 7 to 9.
